# EUROPÄISCHE PATENTSCHRIFT

(11) **EP 1 794 500 B1**
(45) Veröffentlichungstag und Bekanntmachung des Hinweises auf die Patenterteilung: **08.04.2015**
(21) Anmeldenummer: 05707790.1
(22) Anmeldetag: 17.01.2005
(51) Int. Cl.: F23Q 7/00, F02P 19/02, G01L 23/10

(54) **GLÜHSTIFTKERZE MIT ELASTISCH GELAGERTEM GLÜHSTIFT**
SHEATHED-ELEMENT HEATER PLUG COMPRISING AN ELASTICALLY MOUNTED HEATER PLUG
BOUGIE AVEC CRAYON DE PRECHAUFFAGE A MONTAGE ELASTIQUE

(30) Priorität: 16.03.2004 DE 102004012673
(43) Veröffentlichungstag der Anmeldung: 13.06.2007
(73) Patentinhaber: ROBERT BOSCH GMBH, 70442 Stuttgart (DE)
(72) Erfinder: LUDWIG, Thomas, 46569 Huenxe (DE); REISSNER, Andreas, 70499 Stuttgart (DE); GLOCK, Oliver, 70378 Stuttgart (DE)
(86) Internationale Anmeldenummer: PCT/EP2005/050173
(87) Internationale Veröffentlichungsnummer: WO 2005/090865

(56) Entgegenhaltungen:
- EP-A- 1 096 141
- EP-A- 1 281 915
- EP-A- 1 517 086
- WO-A-83/01093
- WO-A-97/09567
- US-A- 4 620 511
- US-A- 4 682 008

## Beschreibung

Die Erfindung bezieht sich auf eine Glühstiftkerze für eine Brennstoffkraftmaschine, bestehend im wesentlichen aus einem Kerzengehäuse und einem mit dem Kerzengehäuse elektrisch verbundenen Glühstift, sowie einem integrierten Drucksensor.

### Stand der Technik

Dieselmotoren benötigen für ein gutes Start- und Warmlaüfverhalten bei tiefen Temperaturen eine Wärmequelle, die entweder das Gasgemisch, die Ansaugluft oder den Brennraum vorwärmen. Für PKW-Motoren wird in der Regel die Verwerdung von Glühstiftkerzen vorgeschlagen. Diese bestehen aus einem Kerzengehäuse und einem aus dem Kerzengehäuse ragenden Glühstift, der in seinem montierten Zustand in den Brennraum einer Brennstoffkraftmaschine hineinragt. In der Regel ragen die Glühstifte der Glühstiftkerzen um 4 mm in den Brennraum der Brennstoffkraftmaschine und erwärmen das Diesel-Luft-Gemisch. Erreichte Glühtemperatur und Nachglühzeit der Glühstiftkerze haben dabei einen erheblichen Einfluss auf das Abgasverhalten, den Kraftstoffverbrauch der Brennstoffkraftmaschine und das Leerlaufverhalten nach dem Start.

Um die vorgegebenen Ziele, weiter Kraftstoff einzusparen und Emissionen zu senken, zu erreichen, besteht ein zunehmendes Interesse darin, kostengünstige Sensoren zu entwickeln, die Informationen über den Verbrennungsverlauf direkt aus dem Brennraum des Motors liefern können. Aus diesen Informationen könnte z.B. die Einspritzmengenregelung vorgenommen werden. Die Verfolgung des Druckes innerhalb des Brennraums hätte wesentliche Vorteile beispielsweise gegenüber der Ionenstrommessung die lediglich eine lokale Information liefert, da die Druckmesswerte bzw. deren Änderungen grösser und daher einfacher erfassbar sind.

Sensorintegrative Konzepte, bei denen ein Drucksensor an oder in der Glühstiftkerze angeordnet sind, haben den Vorteil, dass kein zusätzliches Bohrloch in der Brennstoffkraftmaschine vorgesehen sein muss. Dieser Vorteil vergrössert sich um so mehr, da bei modernen Brennstoffkraftmaschinen der Bauraum zum Anbringen von zusätzlichen Sensoren sehr eingeschränkt ist.

Aus dem Stand der Technik werden Lösungen vorgeschlagen, die ein piezoelektrisches Element zwischen dem Gehäuse und der Verschraubung am Zylinder einer Glühstiftkerze vorsehen, so beispielsweise aus der EP 1 096 141 A bekannt. Des weiteren wird in der Druckschrift WO 97 09 567 A ein zusätzlicher Drucksensor in der Glühstiftkerze vorgeschlagen, der zwischen einem Fixierungsglied und einem Zylinderdruckaufnahmeglied in einem Körper einer Glühstiftkerze zwischengeschaltet ist.

Gemäß dem Stand der Technik sind in Glühstiftkerzen Glühstifte fest mit dem Kerzengehäuse verpresst, um eine gute Masseankopplung und Dichtung zu gewährleisten.

Ein innerhalb der Glühstiftkerze angebrachter Sensor hat bei Hochdruckbeaufschlagung die minimale Längenänderung (im um-Bereich) des Glühstifts zu erfassen, wofür ein Piezosensor in Frage kommt.

### Aufgabe der Erfindung

Die Aufgabe der Erfindung besteht darin, eine Glühstiftkerze mit integriertem Drucksensor derart weiterzuentwickeln, dass eine deutliche Messung mit einem hinreichenden Signal-/RauschVerhältnis ermöglicht wird.

### Lösung der Aufgabe

Die Lösung der Aufgabe besteht darin, dass elastische Elemente vorgesehen sind, welche sich zwischen der Innenfläche des Kerzengehauses und dem Glühstift befinden, welche einen elektrischen Kontakt sowohl zu einem Teil der Innenfläche des Kerzengehäuses als zu einem Teil der Stiftoberfläche bilden, welche bei einer Kraftwirkung auf den Glühstift verformbar sind und welche eine Relativbewegung zwischen Glühstift und Gehäuse erlauben, wobei die elastischen Elemente bezüglich des Kerzengehäuses eine definierte Position einnehmen und wobei der Glühstift eine radiale Auskragung aufweist, an der sich beidseitig die elastischen Elemente befinden.

### Vorteile der Erfindung

Einer der wesentlichen Vorteile der Erfindung besteht darin, dass der Glühstift eine makroskopische Bewegung gegenüber dem Gehäuse ausführen kann. Die Verformung der leitenden elastischen Elemente stellt gleichzeitig sicher, das dieses jederzeit sowohl mit dem Glühstift als auch mit dem Gehäuse verbunden ist, wodurch die elektrische Verbindung stets gewährleistet ist.

Wirkt eine Kraft auf den Glühstift, beispielsweise durch eine Druckerhöhung in dem Brennraum, in den der Glühstift hineinragt, so kann sich der Glühstift gegenüber dem Gehäuse bewegen. Diese Bewegung ist deutlich größer als die Längenänderung, welche die Glühstiftstiftkerze bei Druckeinwirkung aufgrund ihrer Materialeigenschaften erfährt.

Durch die Bewegungsmöglichkeit kann der Glühstift die Kraft, die er durch die Druckänderung im Brennraum erfährt, auf einen in die Glühstiftkerze integrierten oder der Glühstiftkerze nachgeschalteten Drucksensor weitergeben.

Größere Relativbewegungen zwischen Gehäuse und Glühstift führen zu einem leichter erfassbaren Messsignal, zu einem optimierten Signal-/Rausch-Verhältnis und erlauben den Einsatz vielfältiger Messtechniken, da keine Beschränkung auf das Messen mikroskopischer Größen vorliegt.

Vorzugsweise besitzen die elastischen Elemente eine möglichst hysteresefreie Elastizität. Die Relativbewegung des Glühstifts hängt somit nicht von der Richtung der Kraft ab, sondern aus der Verschiebung des Glühstifts gegenüber dem Kerzengehäuse lässt sich direkt die Kraft ablesen, unabhängig davon, ob der Druck im Brennraum zunimmt oder abnimmt.

Als Material, das eine gute elektrische Leitfähigkeit aufweist, das elastische verformbar ist und dabei eine minimale Hysterese der elastischen Verformung zeigt, kommen z.B. Kupferlegierungen in Frage. Diese eignen sich überdies auch als Dichtung und sind korrosionsbeständig.

Die Kalibrierung des Messsystems, zu dem der Glühstift selbst zuzuordnen ist, erfordert, dass dieser seine Ausgangsposition wieder einnimmt. Die elastischen Elemente müssen daher erfindungsgemäß bezüglich des festen Gehäuses eine definierte Position einnehmen.

Vorzugsweise erfolgt eine Justierung der Position der elastischen Elemente über eine Auflage innerhalb des Gehäuses.

Die Auflagefläche kann zur Brennraumseite weisen. Bei der Montage werden die elastischen Elemente, die vorzugsweise eine Ringform besitzen, von der zum Brennraum hinweisenden Seite um den Glühstift und in das Gehäuse gedrückt, und durch eine Vercrimpung kann das Herausrutschen der elastischen Elemente aus dem Gehäuse verhindert werden.

In einer alternativen Ausführungsform weist die Auflagefläche zu der Anschlussseite der Glühstiftkerze. Bei der Montage müssen in diesem Fall das elastische Element von der Anschlussseite um den Glühstift und in das Gehäuse gepresst werden. Auf der Anschlussseite erfolgt eine Justierung der Position der elastischen Elemente vorzugsweise über einen innerhalb des Gehäuses angebrachten Pressring.

In einer weiteren alternativen Ausführungsform kann eine Justierung der Position der elastischen Elemente auch über innerhalb des Gehäuses angebrachte Schweißpunkte erfolgen. Diese Fixierung eignet sich daher für schweißbare elastische Elemente.

Die Positionierung der elastischen Elemente kann auch mit Kombinationen der aufgeführten Fixierungen durchgeführt werden.

Erfindungsgemäß weist der Glühstift mindestens eine radiale Auskragung auf, an der sich beidseitig die elastischen Elemente befinden. Die Auskragung kann mit dem Gehäuse in Kontakt stehen und die elektrische Leitung verbessern.

Die Auskragung führt zu einer Kraftumlenkung. Während bei einem reinen Flächenkontakt zwischen elastischem Element und der Außenfläche des Glühstifts Scherkräfte auf das elastische Element ausgeübt werden, erfolgt die von der Auskragung übertragene Kraft auf das elastische Element in axialer Richtung. Befinden sich außerdem auf beiden Seiten der Auskragung elastische Elemente, so wird bei einer axialen Kraft auf den Glühstift eines der elastischen Elemente gestaucht, eines gestreckt. Eine mögliche, hysteresebedingte Abweichung von Stauchung und Streckung kann sich auf diese Weise ausmitteln.

In einer weiteren vorzugsweisen Ausführungsform liegen die elastischen Elemente in Form eines Spannfederelements vor. Mit einem Spannfederelement lässt sich die Elastizität noch erhöhen, da sich das Elastizitätsmodul nicht nur aufgrund der Materialeigenschaft, sondern auch aufgrund der Gestaltungsgeometrie ergibt.

Durch die Auswahl der Federgeometrie und damit der Federkonstante lässt sich eine Elastizität wählen, die optimal an den Drucksensor angepasst werden kann.

Der Drucksensor kann in unmittelbarer Nähe des elastischen Elements vorgesehen sein oder an anderer Stelle die Bewegung des Glühstiftes erfassen.

Außerdem kann ein Sensor in ein elastisches Element integriert sein, sodass die Verzerrung des elastischen Elements als Maß für den Druck im Brennraum erfasst werden kann.

In einer weiteren Ausführungsform kann der Glühstift gegen das Kerzengehäuse vorgespannt sein und in einem drucklosen Zustand eine elastische Verformung der elastischen Elemente bestehen. Diese wird bei Druck- und damit Krafteinwirkung aufgehoben bzw. vermindert.

Weitere vorteilhafte Ausgestaltungen gehen aus der nachfolgenden Beschreibung sowie den Ansprüchen hervor.

### Zeichnung

Es zeigen:
- Figur 1: ; eine schematische Darstellung eines ersten Ausführungsbeispiels einer nicht erfindungsgemäßen Glühstiftkerze teilweise im Schnitt;
- Figur 2: ; eine Detailansicht gemäß Fig. 1;
- Figur 3: eine schematische Darstellung eines zweiten Ausführungsbeispiels einer nicht erfindungsgemäßen Glühstiftkerze teilweise im Schnitt;
- Figur 4: eine schematische Darstellung der erfindungsgemäßen Glühstiftkerze teilweise im Schnitt;
- Figur 5: eine schematische Darstellung eines vierten Ausführungsbeispiels einer nicht erfindungsgemäßen Glühstiftkerze teilweise im Schnitt.

### Beschreibung der Ausführungsbeispiele

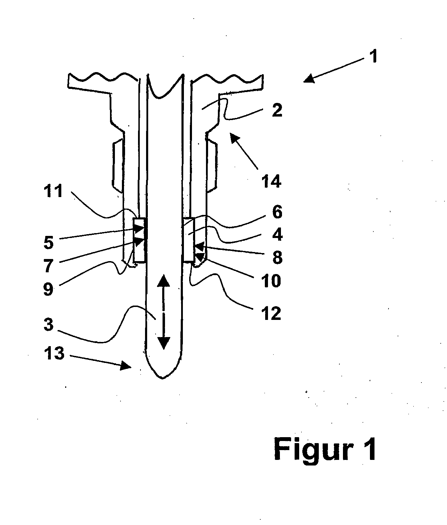

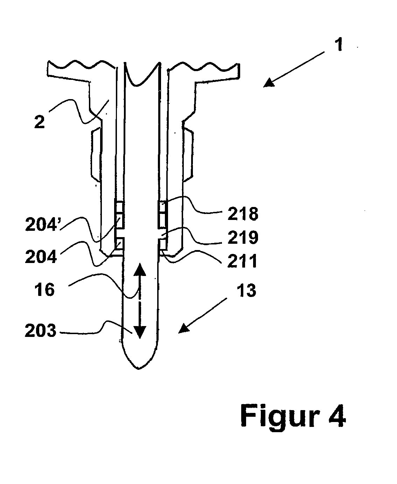

Die Erfindung bezieht sich auf eine keramische Glühstiftkerze 1, wie sie in der Fig. 4 dargestellt ist. Figur 1 zeigt eine nicht erfindungsgemässe Glühstiftkerze 1. Sie besteht aus einem Kerzengehäuse 2 sowie einem keramischen Glühstift 3.

Zwischen Kerzengehäuse 2 und Glühstift 3 befindet sich ein elektrisch leitfähiges, elastisches Element 4, das in Form eines Ringelementes ausgebildet ist. Mit seiner Innenfläche 5 bildet es einen Flächenkontakt 6 mit einem Teil der Glühstiftkerzenoberfläche 7, mit seiner Außenfläche 8 einen weiteren Flächenkontakt 9 mit einem Teil der Innenfläche 10 des Kerzengehäuses 2. Die Flächenkontakte 6, 9 gewährleisten die elektrische Verbindung zwischen Kerzengehäuse 2 und Glühstift 3.

Die Verformbarkeit des elastischen Elements 4 führt dazu, dass sich bei einer Kraftwirkung auf die Glühstiftkerze 1, beispielsweise durch eine Druckerhöhung in dem in der Figur nicht näher dargestellten Brennraum, der Glühstift 3 eine Bewegung relativ zum Kerzengehäuse 2 ausführen kann. Die Quantität der Bewegung kann von einem ebenfalls nicht in der Figur dargestellten Sensor erfasst werden und dient als Maß für den in dem Brennraum vorliegenden Druck.

Das elastische Element 4 wird anschlussseitig mittels einer an dem Kerzengehäuse 2 angebrachten Auflagefläche 11 in Position gehalten. Brennraumseitig verhindert eine Vercrimpung 12 das Herausgleiten des elastischen Elements 4 aus dem Kerzengehäuse 2. Bei der Montage kann das elastische Element über den Glühstift 3 gestülpt werden und von der Brennraumseite 13 in Richtung der Anschlussseite 14 gegen die Auflagefläche 11 gepresst werden, anschließend erfolgt die Fixierung mittels der Vercrimpung 12.

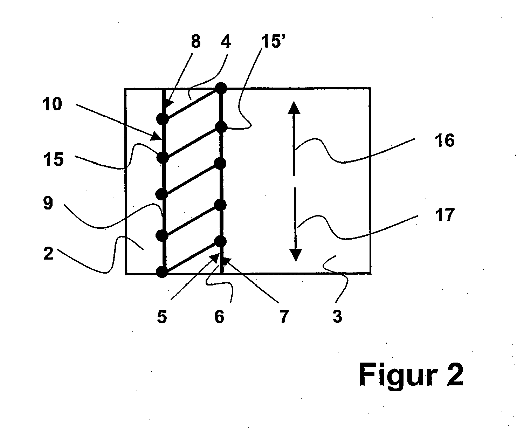

Figur 2 zeigt eine Detailansicht des Schnitts aus Figur 1. Gezeigt sind die Flächenkontakte 6, 9, einerseits zwischen der Außenseite 8 des elastischen Elements 4 und einem Teil der Innenfläche 10 des Kerzengehäuses 2, andererseits zwischen der Innenfläche 7 des elastischen Elements 4 und einem Teil der Außenfläche 5 des Glühstifts 3. Ohne äußere Druckeinwirkung im Brennraum liegen korrespondierende Kontaktpunkte 15, 15' einander gegenüber. Wirkt jedoch ein erhöhter Druck und somit eine Kraft auf den Glühstift 3 in Anschlussrichtung 16, so erfolgt eine Scherung des
elastischen Elements und die korrespondierenden Kontaktpunkte 15, 15' verschieben sich gegeneinander. Dabei bleiben die Flächenkontakte 6, 9 unbeeinflusst, sodass eine niederohmige Verbindung zwischen Glühstift 3 und Kerzengehäuse 2 gewährleistet ist.

Lässt der äußere Druck nach und wirkt somit keine Kraft mehr, so bewegt sich der Glühstift 3 wieder in Brennraumrichtung 17 und die korrespondierenden Kontaktpunkte 15, 15' liegen wieder gegenüber (nicht in der Figur dargestellt).

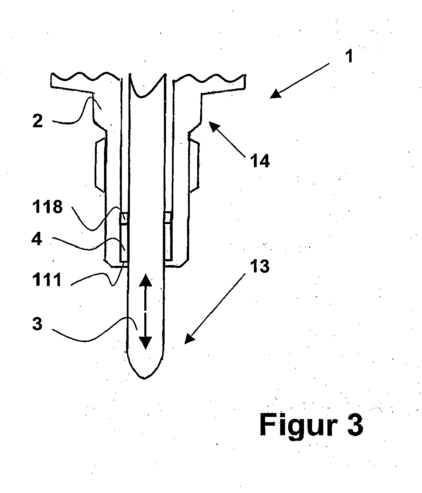

Figur 3 zeigt ein zweites Ausführungsbeispiel für eine nicht erfindungsgemäße Glühstiftkerze 1 mit Kerzengehäuse 2, Glühstift 3 und elastischem Element 4 in einem Teilschnitt.

In diesem Beispiel wird das elastische Element 4 brennraumseitig durch eine Auflagefläche 111 in Position gehalten, anschlussseitig ist zur Fixierung ein Pressring 118 vorgesehen.

Bei der Montage wird das elastische Element 4 von der Anschlussseite 14 in Richtung der Brennraumseite 13 gegen die Auflagefläche 111 gepresst und mittels des Pressrings 118 fixiert.

Figur 4 zeigt eine erfindungsgemäße Glühstiftkerze 1 mit Kerzengehäuse 2, einem Glühstift 203 und elastischen Elementen 204, 204' in einem Teilschnitt.

Efindungsgemäß weist der Glühstift 203 eine radiale Auskragung 219 auf. Der Glühstift 203 steht über die Auskragung 219 selbst in einem Kontakt mit dem Kerzengehäuse 2.

Die erfindungsgemäße Anordnung weist zwei elastische Elemente 204, 204' auf. Das eine elastische Element 204 liegt auf der Brennraumseite 13 auf einer an dem Kerzengehäuse 2 befindlichen Auflagefläche 211 auf und hat auf der Anschlussseite Kontakt mit der Auskragung 219 des Glühstifts 203. Das zweite elastische Element 204' liegt brennraumseitig auf der Auskragung 219 des Glühstifts 203 auf und wird anschlussseitig durch einen Pressring 218 fixiert.

Bewegt ich nun der Glühstift 203 aufgrund einer äußeren Kraft in Anschlussrichtung 16, so wird das eine elastische Element 204' gestaucht, das andere elastische Element 204 gestreckt. Ein möglicher quantitativer Unterschied zwischen Stauchung und Streckung des elastischen Materials wird so ausgemittelt.

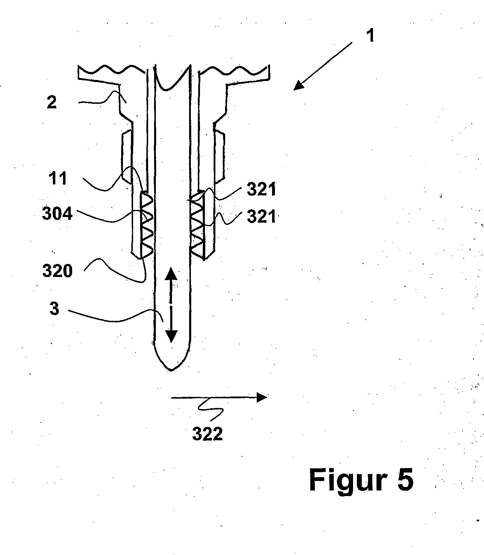

Figur 5 zeigt ein weiteres Ausführungsbeispiel für eine nicht erfindungsgemäße Glühstiftkerze 1 mit Kerzengehäuse 2, einen Glühstift 3 und elastischem Element 304 in einem Teilschnitt.

In diesem Beispiel liegt das elastische Element 304 in Form einer Spannfeder vor. Diese liegt anschlussseitig auf einer in dem Kerzengehäuse 2 angebrachten Auflagefläche 11 auf, brennraumseitig ist die Spannfeder mittels einer Verschweißung 320 fixiert.

Der Kontakt zwischen Spannfeder und Glühstift 3 und Kerzengehäuse 2 erfolgt nur nicht über Flächenkontakte, sondern nur an wenigen Kontaktpunkten 321. Die Spannfeder wird jedoch so ausgelegt, dass die Federwirkung auch in radialer Richtung 322 wirkt und somit ein Reibschluss zwischen Spannfeder und Glühstift 3 sowie zwischen Spannfeder und Kerzengehäuse 2 vorliegt.

## Patentansprüche

1. Glühstiftkerze für eine Brennstoffkraftmaschine mit einem Kerzengehäuse und einem mit dem Kerzengehäuse elektrisch verbundenen Glühstift, sowie mit einem integrierten Drucksensor, wobei elastische Elemente ( 204, 204') zwischen der Innenfläche (10) des Kerzengehäuses (2) und dem Glühstift (3) vorgesehen sind, wobei die elastischen Elemente (204; 204') einen elektrischen Kontakt sowohl zu einem Teil der Innenfläche (10) des Kerzengehäuses (2) als zu einem Teil der Stiftoberfläche (7) bilden und bei einer Kraftwirkung auf den Glühstift (3) verformbar sind und eine Relativbewegung zwischen Glühstift (3) und Gehäuse (2) erlauben, und wobei die elastischen Elemente (204; 204') bezüglich des Kerzengehäuses (2) eine definierte Position einnehmen, **dadurch gekennzeichnet, dass** der Glühstift (3) eine radiale Auskragung (219) aufweist, an der sich beidseitig die elastischen Elemente (204; 204') befinden.

2. Glühstiftkerze gemäß Anspruch 1, **dadurch gekennzeichnet, dass** eine Justie-rung der Position der elastischen Elemente (204; 204') über eine Auflage (11; 111; 211) innerhalb des Gehäuses (2) erfolgt.

3. Glühstiftkerze nach mindestens einem der vorhergehenden Ansprüche, **dadurch gekennzeichnet, dass** eine Justierung der Position der elastischen Elemente ( 204; 204') über einen innerhalb des Gehäuses (2) angebrachten Pressring (118; 218) erfolgt.

4. Glühstiftkerze nach mindestens einem der vorhergehenden Ansprüche, **dadurch gekennzeichnet, dass** eine Justierung der Position der elastischen Elemente ( 204; 204') über an dem Gehäuse (2) angebrachte Schweißpunkte (320) erfolgt.

5. Glühstiftkerze nach mindestens einem der vorhergehenden Ansprüche, **dadurch gekennzeichnet, dass** mindestens ein elastisches Element (204, 204') in Form eines Spannfederelements vorliegt.

6. Glühstiftkerze nach mindestens einem der vorhergehenden Ansprüche, **dadurch gekennzeichnet, dass** ein Drucksensor hinter oder neben dem Glühstift (3) angeordnet ist.

## Claims

1. Sheathed-element heater plug for an internal combustion engine having a heater plug housing and a sheathed element which is electrically connected to the heater plug housing, and having an integrated pressure sensor, wherein elastic elements (204; 204') are provided between the inner face (10) of the heater plug housing (2) and the sheathed element (3), wherein the elastic elements (204; 204') form electrical contact both with part of the inner face (10) of the heater plug housing (2) and with part of the sheathed element surface (7) and they can be deformed when a force acts on the sheathed element (3) and permit a relative movement between the sheathed element (3) and the housing (2), and wherein the elastic elements (204; 204') assume a defined position with respect to the heater plug housing (2), **characterized in that** the sheathed element (3) has a radial collar (219) on which there are elastic elements (204; 204') on both sides.

2. Sheathed-element heater plug according to Claim 1, **characterized in that** the position of the elastic elements (204; 204') is adjusted by means of a support (11; 111; 211) within the housing (2).

3. Sheathed-element heater plug according to at least one of the preceding claims, **characterized in that** the position of the elastic elements (204; 204') is adjusted by means of a press ring (118; 218) which is mounted within the housing (2).

4. Sheathed-element heater plug according to at least one of the preceding claims, **characterized in that** the position of the elastic elements (204; 204') is adjusted by means of welding points (320) provided on the housing (2).

5. Sheathed-element heater plug according to at least one of the preceding claims, **characterized in that** at least one elastic element (204, 204') is present in the form of a tensioning spring element.

6. Sheathed-element heater plug according to at least one of the preceding claims, **characterized in that** a pressure sensor is arranged behind or next to the sheathed element (3).

## Revendications

1. Bougie à crayon de préchauffage pour un moteur à combustion interne comprenant un boîtier de bougie et un crayon de préchauffage connecté électriquement au boîtier de bougie, ainsi qu'un capteur de pression intégré, des éléments élastiques (204, 204') étant prévus entre la surface interne (10) du boîtier de bougie (2) et le crayon de préchauffage (3), les éléments élastiques (204, 204') formant un contact électrique à la fois avec une partie de la surface interne (10) du boîtier de bougie (2) et avec une partie de la surface du crayon (7) et pouvant être déformés lors de l'application d'une force sur le crayon de préchauffage (3) et permettant un mouvement relatif entre le crayon de préchauffage (3) et le boîtier (2), et les éléments élastiques (204 ; 204') adoptant par rapport au boîtier de bougie (2) une position définie, **caractérisée en ce que** le crayon de préchauffage (3) présente une saillie radiale (219) au niveau de laquelle se trouvent de chaque côté les éléments élastiques (204 ; 204').

2. Bougie à crayon de préchauffage selon la revendication 1, **caractérisée en ce qu'**un ajustement de la position des éléments élastiques (204 ; 204') s'effectue par le biais d'un appui (11 ; 111 ; 211) à l'intérieur du boîtier (2).

3. Bougie à crayon de préchauffage selon au moins l'une quelconque des revendications précédentes, **caractérisée en ce qu'**un ajustement de la position des éléments élastiques (204 ; 204') s'effectue par le biais d'une bague de pressage (118 ; 218) montée à l'intérieur du boîtier (2).

4. Bougie à crayon de préchauffage selon au moins l'une quelconque des revendications précédentes, **caractérisée en ce qu'**un ajustement de la position des éléments élastiques (204 ; 204') s'effectue par le biais de points de soudage (320) appliqués sur le boîtier (2).

5. Bougie à crayon de préchauffage selon au moins l'une quelconque des revendications précédentes, **caractérisée en ce qu'**au moins un élément élastique (204, 204') se présente sous la forme d'un élément de ressort de serrage.

6. Bougie à crayon de préchauffage selon au moins l'une quelconque des revendications précédentes, **caractérisée en ce qu'**un capteur de pression est disposé derrière ou à côté du crayon de préchauffage (3).
